# EUROPÄISCHE PATENTSCHRIFT

(11) **EP 0 988 257 B1**
(45) Veröffentlichungstag und Bekanntmachung des Hinweises auf die Patenterteilung: **07.02.2001**
(21) Anmeldenummer: 98923914.0
(22) Anmeldetag: 09.06.1998
(51) Int. Cl.: C03C 4/00, C03C 3/108

(54) **GLASZUSAMMENSETZUNG**
GLASS COMPOSITION
COMPOSITION DE VERRE

(30) Priorität: 09.06.1997 AT 98397; 16.12.1997 AT 211897
(43) Veröffentlichungstag der Anmeldung: 29.03.2000
(73) Patentinhaber: D. Swarovski & Co., 6112 Wattens (AT)
(72) Erfinder: SPRACHMANN, Gerold, A-6114 Kolsass (AT)
(74) Vertreter: Torggler, Paul Norbert, Dr.
(86) Internationale Anmeldenummer: AT9800140
(87) Internationale Veröffentlichungsnummer: WO9856724

(56) Entgegenhaltungen:
- DE-A- 2 334 201
- DATABASE WPI Section Ch, Week 9039 Derwent Publications Ltd., London, GB; Class L01, AN 90-296294 XP002076263 -& SU 1 528 748 A (GLASS RES INST)
- PATENT ABSTRACTS OF JAPAN vol. 016, no. 238 (C-0946), 2. Juni 1992 -& JP 04 050133 A (SASAKI GLASS CO LTD), 19. Februar 1992

## Beschreibung

Typische Bleikristallgläser bestehen aus 50% SiO₂, 30% PbO, 10% K₂O, 4 - 5% Na₂O, Rest Al₂O₃, ZnO, B₂O₃. (Diese Prozentangaben wie die in der ganzen Beschreibung beziehen sich auf Gewichtsprozent).

Bekannte SiO₂, PbO, Na₂O, K₂O, ZnO und B₂O₃ enthaltende Bleikristallgläser sind beschrieben in DE-A-2.334.201, SU-A-1 528 748 und JP-A-4 050 133.

Es hat sich herausgestellt, daß bei derartigen Gläsern unter bestimmten klimatischen Bedingungen Korrosion auftreten kann. Dies wird darauf zurückgeführt, daß bei Taubildung Na und K aus dem Glas gelöst werden und an der Oberfläche mit CO₂ oder SO₂ reagieren. Dies ist besonders bei Glaszusammensetzungen, welche primär dekorative Funktion haben, nachteilig.

Es ist möglich, die Korrosion von Gläsern dadurch zu verringern, daß der Gehalt an K und Na heruntergesetzt wird. Obwohl Glaszusammensetzungen mit 50 - 54% SiO₂ und 30 - 33% PbO bekannt sind, deren Gesamtmenge an K₂O und Na₂O unter 13% liegt, sind diese Gläser unter extremen Bedingungen immer noch korrosionsanfällig. Um dies zu verhindern, wäre es nicht möglich, die Gesamtmenge an K₂O und Na₂O noch wesentlich weiter zu senken. Diesse Elemente haben nämlich innerhalb der Glasmischung die wichtige Funktion, die Schmelztemperatur zu begrenzen. Es muß also nach einer Möglichkeit gesucht werden, das Austreten von K₂O und Na₂O bei tiefen Temperaturen zu hemmen, ohne dabei die Schmelztemperatur zu erhöhen.

Erfindungsgemäß ist es auch bei einer nur geringfügigen Unterschreitung der genannten Grenze von 13% für die Gesamtmenge an Na₂O und K₂O möglich, ausreichende Korrosionsfestigkeit mit vertretbarer Schmelztemperatur zu verbinden, indem vorgesehen wird,. daß der Anteil an B₂O₃ zusammen mit ZnO zwischen 4 und 8% liegt, wobei der Anteil an B₂O₃ allein weniger als 4% beträgt. Die Erfindung nützt die Eigenschaft von Bor aus, bei tiefen Temperaturen das von SiO₂ gebildete Netzwerk zu verstärken und dadurch Korrosion zu verhüten, bei hohen Temperaturen die Schmelzbarkeit jedoch zu erhöhen. Allerdings ist letztere Eigenschaft von Bor nur gegeben, solange dessen Gesamtmenge unter 4% liegt. Will man also die Festigkeit des Netzwerks bei tiefen Temperaturen weiter erhöhten, muß eine weitere Komponente zugesetzt werden, wofür sich ZnO anbietet.

Es wurde gefunden, daß trotz des relativ geringen Alkaligehaltes die Schmelzbarkeit der Glaszusammensetzung besonders dann relativ gut ist, wenn gegenüber herkömmlichen Gläsern der Kaliumgehalt stärker abgesenkt wird als der Natriumgehalt. Bereits bei einem Gewichtsverhältnis K₂O zu Na₂O unter 1,5 ist die Absenkung der Schmelztemperatur im Vergleich zu einer üblichen Mischung erheblich. Vorzugsweise liegt das Verhältnis K₂O zu Na₂O unter 1. Überrraschend war, daß bei einem derart niedrigen Gehalt an K₂O keine Entglasungen auftreten. Gemäß der empirischen Zschimmerschen Bleiglasregel (Masse% K₂O = (76-Masse% PbO)*0,27 (Werner Vogl"Glaschemie" Springerverlag) müßte bei einem PbO-Gehalt von 32% der Mindestgehalt an K₂O 11,9% betragen, um das Auftreten von Entglasungen zu verhindern. Überraschenderweise ist jedoch im vorliegenden Bleiglassystem trotz sehr niedrigem Gehalt an K₂O (und daraus resultierendem höherem Na₂O-Gehalt) das Glas entlgasungsstabil.

Ein Ausführungsbeispiel der Erfindung weist folgende Zusammensetzung auf:
SiO₂ - 50,9
PbO - 32,0
B₂O₃ - 1,8
K₂O - 4,0
Na₂O - 6,8
ZnO - 4,0
Al₂O₃ - 0,3
Sb₂O₃ - 0,2

Der Brechungsindex dieses Glases beträgt 1,58, die Schmelztemperatur 1300°C, die Verarbeitungstemperatur 892°C. Das Glas ist extrem korrosionsbeständig.

Ersetzt man in dieser Zusammensetzung die Na₂O-Moleküle teilweise durch K₂O-Moleküle, steigt die Schmelztemperatur an. Für eine äquimolare Mischung beträgt sie 1316°C, bei molarer Vertauschung von K₂O und Na₂O beträgt sie sogar 1353°C.

## Patentansprüche

1. Glaszusammensetzung mit 50 - 54% SiO₂ und 30 - 33% PbO, wobei die Gesamtmenge an K₂O und Na₂O zwischen 9 und 13% liegt, dadurch gekennzeichnet, daß der Anteil an B₂O₃ zusammen mit ZnO zwischen 4 und 8% liegt, wobei der Anteil an B₂O₃ allein weniger als 4% beträgt.

2. Glaszusammensetzung nach Anspruch 1, dadurch gekennzeichnet, daß das Gewichtsverhältnis von K₂O zu Na₂O unter 1,5 liegt.

3. Glaszusammensetzung nach Anspruch 2, dadurch gekennzeichnet, daß der Gehalt an Na₂O höher ist als jener an K₂O.

## Claims

1. Glass composition with 50 to 54% of SiO₂ and 30 to 33% of PbO with a total quantity of K₂O and Na₂O between 9 and 13%, characterized in that the fraction of B₂O₃ together with ZnO is between 4 and 8%, with the fraction of B₂O₃ alone being less than 4%.

2. Glass composition as claimed in claim 1, characterized in that the ratio of weight of K₂O to Na₂O is less than 1.5.

3. Glass composition as claimed in claim 2, characterized in that the content of Na₂O is greater than that of K₂O.

## Revendications

1. Composition de verre comprenant entre 50 % et 54 % de dioxyde de silicium (SiO₂) et entre 30 % et 33 % de monoxyde de plomb (PbO), où la quantité totale d'oxyde de potassium (K₂O) et d'oxyde de sodium (Na₂O) est comprise entre 9 % et 13 %,
caractérisée en ce que la quantité d'oxyde de bore (B₂O₃) associé à de l'oxyde de zinc est comprise entre 4 % et 8 %,
où la quantité d'oxyde de bore (B₂O₃) seul est inférieure à 4 %.

2. Composition de verre selon la revendication 1, caractérisée en ce que le rapport de poids entre l'oxyde de potassium (K₂O) et l'oxyde de sodium (Na₂O) est inférieur à 1,5.

3. Composition de verre selon la revendication 2, caractérisée en ce que la teneur en oxyde de sodium (Na₂O) est supérieure à celle en oxyde de potassium (K₂O).
